# EUROPEAN PATENT SPECIFICATION

(11) **EP 3 552 528 B1**
(45) Date of publication and mention of the grant of the patent: **31.03.2021**
(21) Application number: 19168933.0
(22) Date of filing: 12.04.2019
(51) Int. Cl.: A47J 37/07

(54) **GAS-FIRED BARBEQUE GRILL COOKING SYSTEMS**
GASGRILL
BARBECUE À GAZ

(30) Priority: 13.04.2018 US 201862657295 P
(43) Date of publication of application: 16.10.2019
(73) Proprietor: LANDMANN GmbH & Co. Handels-KG, 27711 Osterholz-Scharmbeck (DE)
(72) Inventor: Gold, Jason, Scottsdale, Arizona 85255 (US)
(74) Representative: Aulich, Martin

(56) References cited:
- US-A1- 2005 178 450
- US-A1- 2010 252 020
- US-A1- 2011 174 405
- giordanoshop: "SISTEMA CULINARY MODULAR CAMPINGAZ", YouTube, 17 February 2014 (2014-02-17), pages 1-1, XP054979576, Retrieved from the Internet: URL:https://www.youtube.com/watch?v=DUgXKn Pk_bk [retrieved on 2019-08-02]

## Description

### BACKGROUND

### Technical Field

The present disclosure relates to cooking systems and, more particularly, to gas-fired barbeque grills.

### Description of the Related Art

Conventional barbeque grills that use gas (e.g., propane) as a heating fuel tend to incorporate multiple control valves for regulating the flow of gas. With such a design, each of the control valves typically is associated with a portion or "zone" of the cooking surface for controlling the amount of heat applied to that zone and each valve is controlled by a separate control actuator (e.g., a dial). Unfortunately, the use of multiple control actuators often results in increased costs of production owing to the manufacture and installation of these multiple components. Therefore, it is desirable to provide gas-fired barbeque grill cooking systems that address these perceived deficiencies

US 2010/252020 A1 discloses a barbeque grill.

### SUMMARY

According to the invention, the gas-fired barbecue grill cooking system comprises: a firebox; a burner assembly mounted within the firebox, the burner assembly having a first burner tube defining a first cooking zone and a second burner tube defining a second cooking zone; and a gas control assembly having a gas control valve and a control actuator, the gas control valve being configured, in response to positioning of the control actuator, to selectively control a first flow of gas to the first burner tube and a second flow of gas to the second burner tube such that the first cooking zone and the second cooking zone are operable to be heated independently in a first mode, in which only one of the first cooking zone and the second cooking zone is heated, and heated simultaneously in a second mode.

According to the invention, the control actuator comprises a control knob and a selector ring, each of which is rotatable about a common axis.

According to the invention, the selector ring being configured to designate, via rotation, at least one of the first burner tube or the second burner tube for receiving a corresponding flow of gas.

According to the invention, the control knob being is configured to set a flow rate of gas to the at least of the first burner tube or the second burner tube designated with the selector ring.

In some embodiments, the gas control valve has a primary gear and a secondary gear, the primary gear being configured to be rotated via the control knob, the secondary gear being selectively engaged by the primary gear in response to rotation of the selector ring.

In some embodiments, the gas control valve has a valve head defining a gas flow passage therethrough and the valve head is configured to rotate in response to rotation of the secondary gear.

In some embodiments, the system further comprises a cooking grate assembly positioned above the burner assembly.

In some embodiments, the cooking grate assembly has a grate section, defining an aperture, and a removable grate section configured to be received within the aperture.

In some embodiments, the removable grate section has a central plate.

In some embodiments, the first burner tube has an intermediate portion in a generally circular configuration; and the aperture of the grate section is positioned above the intermediate portion of the first burner tube.

In some embodiments, a burner shield assembly is positioned above the burner assembly, the burner shield assembly having a first shield segment positioned above the first burner tube and a second shield segment positioned above the second burner tube.

In some embodiments, the first burner tube has an intermediate portion in a generally circular configuration; and the first shield segment has an intermediate portion in a generally circular configuration aligned with the intermediate portion of the first burner tube.

In some embodiments, the first shield segment exhibits a V-shaped cross-section and an apex of the cross-section is rounded.

In some embodiments, the gas control valve has a manifold, a first valve head, a second valve head, a primary gear, a first secondary gear and a second secondary gear; the manifold having a first valve receptacle, a second valve receptacle, and an inlet port, a first outlet port and a second outlet port, the inlet port in fluid communication with the first outlet port and the second outlet port; the first valve head, extending into the first valve receptacle, having a first gas flow passage formed therethrough, the second valve head, extending into the second valve receptacle, having a second gas flow passage formed therethrough; the first valve head being configured to rotate in response to rotation of the first secondary gear, the second valve head being configured to rotate in response to rotation of the second secondary gear; primary gear being configured to selectively engage at least one of the first secondary gear and the second secondary gear.

Other features and/or advantages will become apparent from the following detailed description of the preferred but non-limiting embodiments.

### BRIEF DESCRIPTION OF THE DRAWINGS

FIG. 1 is a schematic diagram of an embodiment of a gas-fired barbeque grill cooking system.
FIG. 2 is a schematic, assembly diagram depicting various components of the embodiment of FIG. 1.
FIG. 3 is a schematic diagram of a portion of an embodiment of a gas control assembly and associated burner assembly in plan view.
FIGs. 4-6 are schematic diagrams of another embodiment of a gas control assembly and associated burner assembly in perspective, plan and front elevation views, respectively.
FIGs. 7-9 are schematic diagrams of an embodiment of a burner shield assembly shown with the gas control assembly and associated burner assembly of FIGs. 4-6, in plan, front and side elevation views, respectively.
FIG. 10 is a schematic diagram of an embodiment of a cooking grate assembly in plan view.
FIGs. 11 and 12 are schematic diagrams of the embodiment of the cooking grate assembly of FIG. 10 shown in operative position with a gas control assembly, burner assembly and burner shields, in plan (bottom) and front side elevation views, respectively.
FIG. 13 is a schematic, assembly diagram depicting various components of an embodiment of a gas control valve.
FIG. 14 is a schematic diagram, in perspective view with the control knob and ring removed, of the embodiment of the gas control valve of FIG. 13.
FIGs. 15 and 16 are schematic diagrams, in side elevation and perspective views, respectively, of the embodiment of the gas control valve of FIGs. 13 and 14.
FIG. 17 is a schematic diagram, in rear elevation, of the embodiment of the gas control valve of FIGs. 13-16.
FIGs. 18-20 are schematic, cross-sectional diagrams, of the embodiment of the gas control valve of FIGs. 13-16 as viewed along section lines A-A, B-B and C-C, respectively, of FIG. 17.
FIG. 21 is a schematic diagram, in partially cut-away, perspective of the rear of the gas control valve of FIGs. 13-20, showing representative gas flow paths.

### DETAILED DESCRIPTION

For ease in explanation, the following describes several embodiments of gas-fired barbeque grill cooking systems. It is to be understood that the invention is not limited in its application to the details of the particular arrangements shown since the invention is capable of other embodiments. Also, the terminology used herein is for the purpose of description and not of limitation.

In this regard, various embodiments may provide alternatives to conventional gas-fired cooking systems that use multiple gas control actuators, with each configured to control a corresponding cooking zone. This may be accomplished by a gas-fired barbeque grill cooking system that incorporates multiple cooking zones but uses a single control actuator to selectively control those zones. Preferred embodiments will now be described with reference to the drawings.

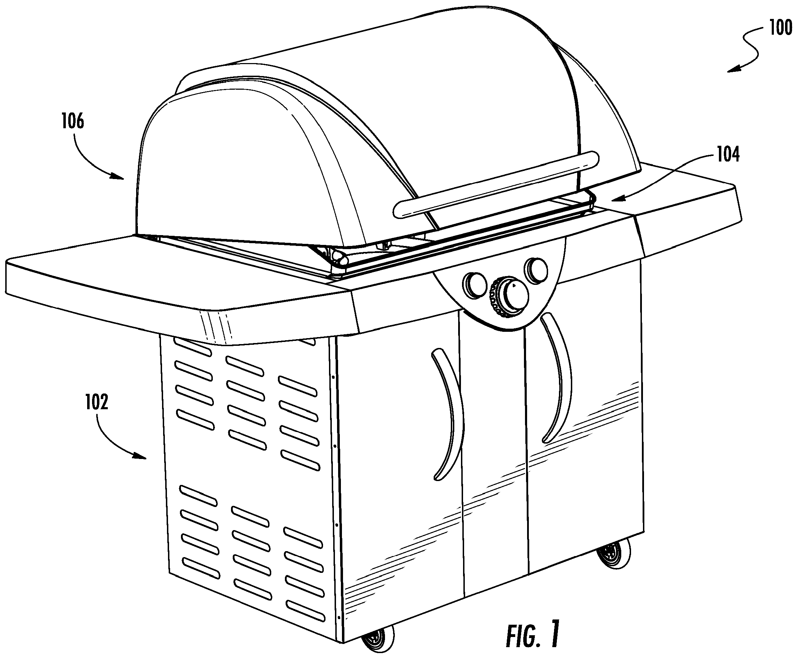

As shown in FIG. 1, an embodiment of a gas-fired barbeque grill cooking system 100 is provided that includes a base structure 102, a firebox assembly 104 mounted to base structure 102, and a lid assembly 106 movably mounted to base structure 102 to alternately enclose or provide access to firebox assembly 104. Although configured as a mobile platform (e.g., a wheeled cart) in FIG. 1, base structure 102 may be configured as a stationary structure, such as in an outdoor island cooking structure in some embodiments.

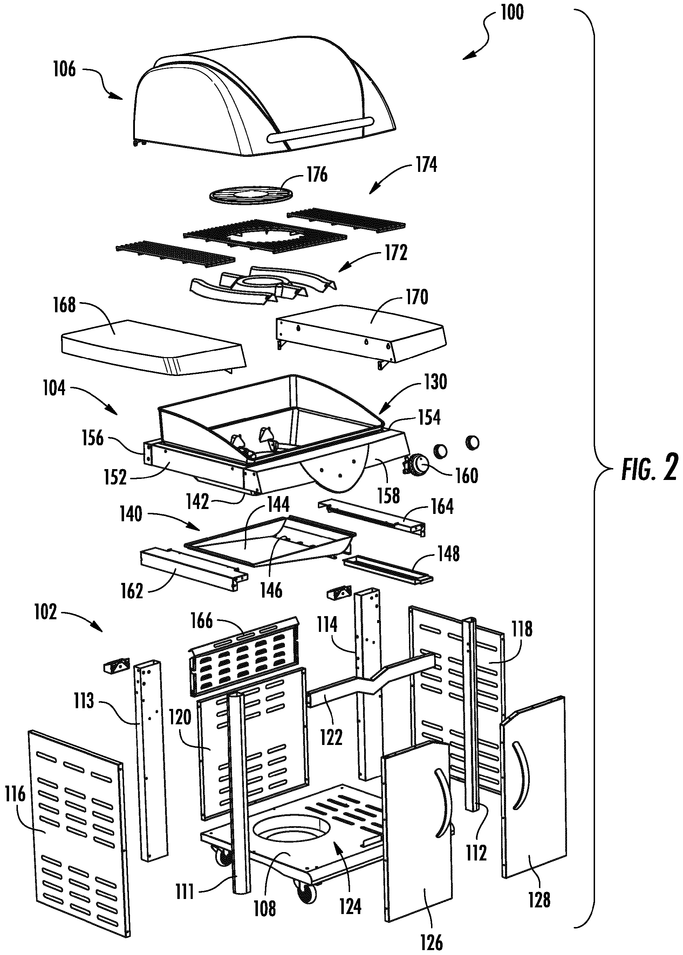

Various components of the embodiment of FIG. 1 are shown in greater detail in the assembly diagram of FIG. 2. In particular, base structure 102 includes a wheeled base 108 from which vertical frame members 111-114 extend. Opposing side panels 116 and 118, as well as rear panel 120 (one or more of which may be louvered), are mounted to corresponding ones of the frame members to form an enclosure. In some embodiments, the enclosure may be configured to store a gas tank (not shown). A horizontal frame member 122 extends between frame members 111 and 112 to define an opening 124. Door panels 126 and 128 are hingedly mounted to frame members 111 and 112, respectively, to provide access to an interior of the enclosure via opening 124.

Firebox assembly 104 incorporates a firebox 130 that is configured to mount therein a burner assembly 132 (described later). Firebox 130 can be constructed of steel, aluminum, or other heat resistant material. In this embodiment, a grease catchment 140 is provided at a bottom 142 of firebox 130 to receive grease and/or other droppings from food items that are being cooked within the firebox. A bottom 144 of grease catchment 140 is downwardly inclined toward exit apertures (e.g., exit aperture 146), which are configured to permit grease to flow into a removable bin 148.

Trim panels are mounted to the exterior of firebox 130, including side trim panels 152 and 154, rear trim panel 156, and control panel 158. Notably, control panel 158 locates a control actuator 160 of a control valve assembly (shown and described later). Firebox assembly 104 is mounted to base structure 102 via brackets 162 and 164. Additionally, an optional louvered rear panel 166 is depicted, as well as optional side shelves 168 and 170, which extend from side trim panels 152 and 154, respectively.

A burner shield 172 is mounted between burner assembly 132 and a cooking grate assembly 174. In the embodiment of FIG. 2, cooking grate assembly 174 incorporates a removable grate portion 176, which is circular in configuration to accommodate placement of a cooking pot and/or pan, for example.

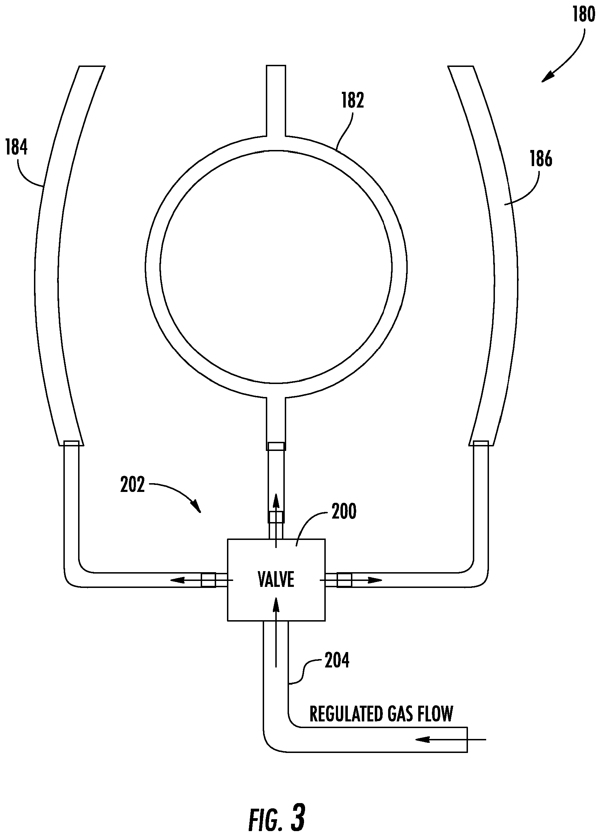

A portion of an embodiment of a gas control assembly and associated burner assembly is depicted in the schematic diagram of FIG. 3. As shown, burner assembly 180 includes a central burner tube 182 flanked by burner tubes 184 and 186. In this embodiment, central burner tube 182 incorporates a circular configuration and constitutes a first cooking zone, with burner tubes 184 and 186 being generally elongate and constituting one or more additional cooking zones. For instance, burner tubes 184 and 186 may be configured to receive gas simultaneously, in which case burner tubes 184 and 186 constitute a second cooking zone. In contrast, burner tubes 184 and 186 may be configured to receive gas independently, in which case burner tubes 184 and 186 constitute second and third cooking zones, respectively. Burner assembly communicates with a gas control valve 200 of a gas control assembly 202 to receive a flow of gas.

A regulated flow of gas is provided to gas control valve 200 by a conduit 204. By way of example, the regulated flow of gas may be provided to conduit 204 from a gas tank via a pressure regulator (both of which are not depicted). Distribution of the flow of gas to and among the burner tubes of burner assembly 180 is controlled by operation of gas control valve 200. Unlike conventional gas control valves, which supply gas either to all or none of the associated burner tubes, gas control valve 200 is configured to supply gas selectively to each of the cooking zones (e.g., to the first cooking zone but not to the second cooking zone). In some embodiments, gas control valve 200 also is configured to control flame height (via gas flow rate regulation) of the cooking zones either simultaneously or independently by zone.

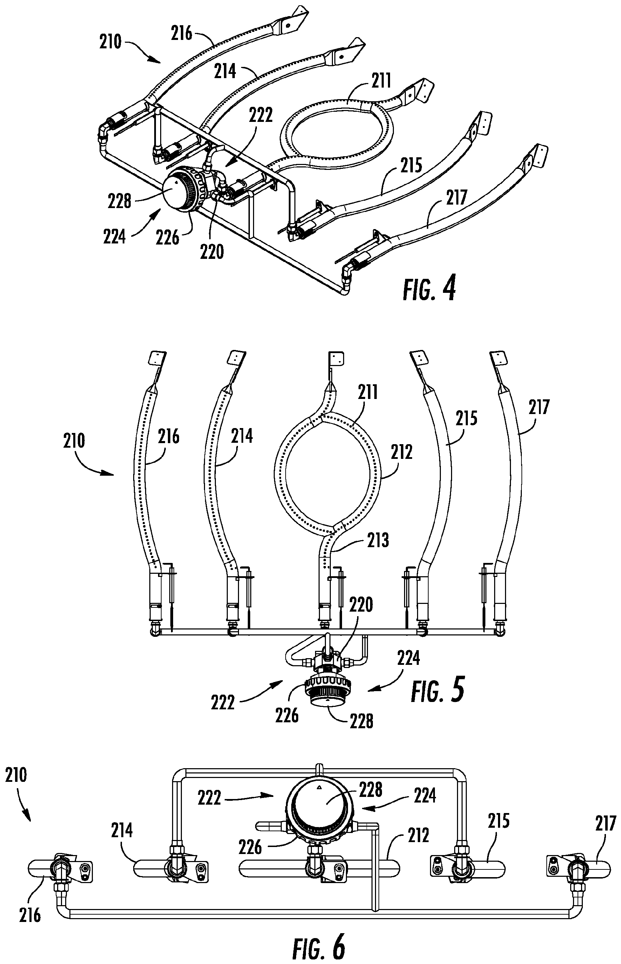

A gas control assembly and associated burner assembly is shown in FIGs. 4-6. Specifically, burner assembly 210 includes a central burner tube 211, which incorporates a generally circular intermediate portion 212 extending between end portions (e.g., end portion 213). Central burner tube 211 is flanked by arcuate-shaped burner tubes 214 and 216 on one side, and arcuate-shaped burner tubes 215 and 217 on the other side. The arcuate-shaped burner tubes are curved toward central burner tube 211.

Central burner tube 211 constitutes a first cooking zone. Burner tubes 214 and 215 constitute a second cooking zone, and burner tubes 216 and 217 constitute a third cooking zone. Notably, each of the cooking zones is able to receive gas independently owing to the configuration of gas control valve 220 of a gas control assembly 222. Specifically, gas control valve 220 is configured to provide gas selectively to each of the first, second and/or third cooking zones so that one or more of the cooking zones may be receiving a flow of gas at any given time.

Operation of gas control valve 220 is facilitated by a control actuator 224, which is configured as a rotatable selector ring 226 coaxially mounted about a rotatable control knob 228. In some embodiments, rotation of selector ring 226 selects which among the zones is to receive gas, while rotation of control knob 228 adjusts a flow rate of gas through gas control valve 220 to the selected zone(s).

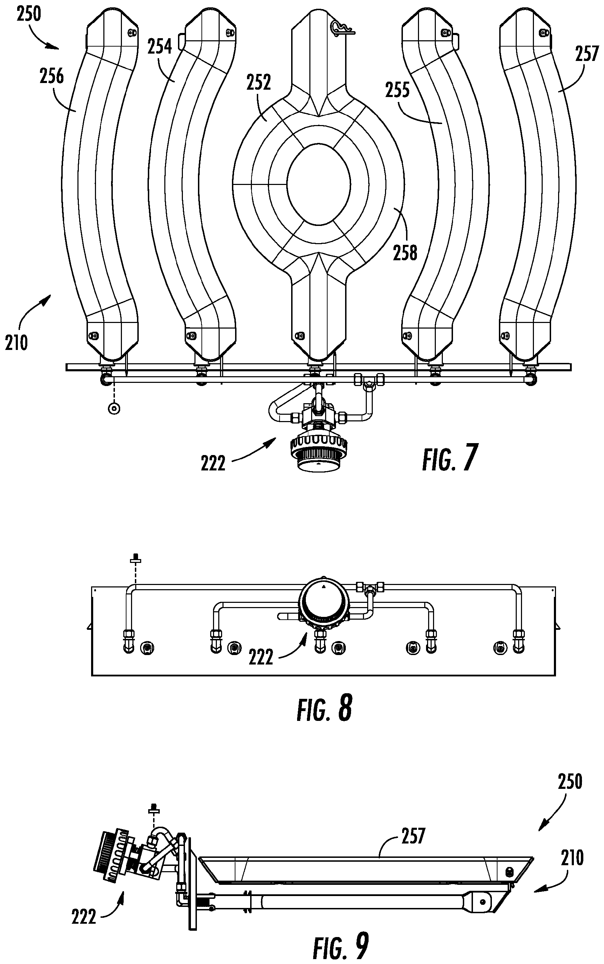

An embodiment of a burner shield assembly 250 is shown in FIGs. 7-9 in an operative position with respect to burner assembly 210 and gas control assembly 222. Burner shield assembly 250 includes multiple shield segments (or "tents"), formed from metal, ceramic, or other heat resistant and heat radiating material. The shield segments prevent grease from impinging on the burner tubes. In cross-section, each of the shield segments may be generally V-shaped, with the apex being rounded in some embodiments.

Each shield segment is aligned over a corresponding burner tube and extends lengthwise, spanning the firebox. Specifically, shield segment 252 is positioned in an overlying relationship with burner tube 212, shield segment 254 is positioned in an overlying relationship with burner tube 214, shield segment 255 is positioned in an overlying relationship with burner tube 215, shield segment 256 is positioned in an overlying relationship with burner tube 216, and shield segment 257 is positioned in an overlying relationship with burner tube 217. Note that shield segment 252 incorporates a generally circular intermediate portion 258 that corresponds to intermediate portion 212 of central burner tube 211.

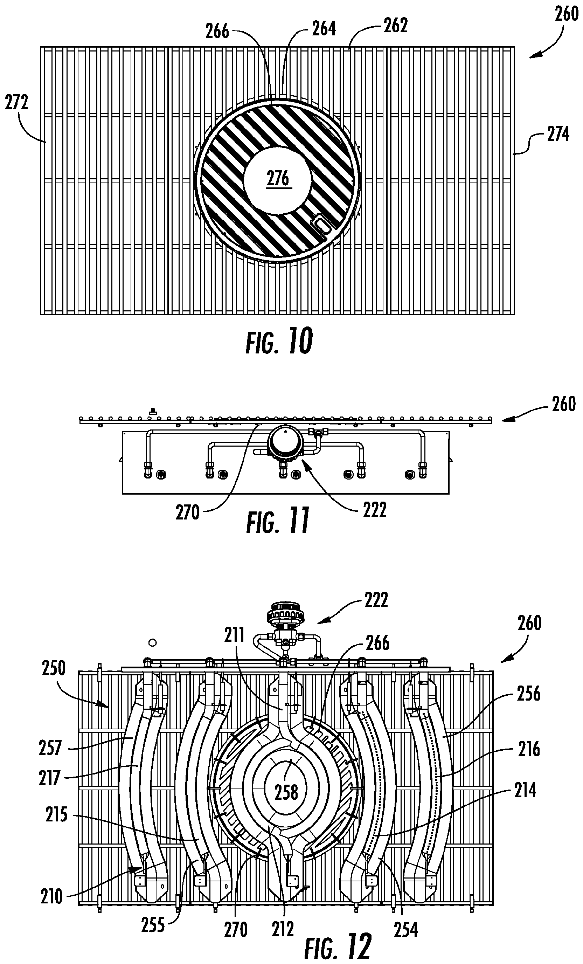

An embodiment of a cooking grate assembly 260 is depicted in FIG. 10. In particular, cooking grate assembly 260 incorporates a grate section 262 that defines a circular aperture 264, which is adapted to receive a cooking pot or pan. A conformal grate section 266 is sized and shaped to be received within the opening formed by aperture 264. As shown in FIGs. 11 and 12, a set of tabs are provided on an underside 268 of grate section 262 that extend inwardly from aperture 264. The tabs (e.g., tab 270) are configured to support grate section 266 so that upper surfaces of grate sections 262 and 266 are aligned. As shown, intermediate portion 212 of central burner tube 211 and intermediate portion 258 of shield segment 252 are configured to improve heat distribution for cooking in the vicinity of grate section 266.

In the embodiment of FIGs. 10-12, removable side grate sections 272 and 274 are provided at opposing side edges of grate section 266. Grate sections are primarily formed of separated rods or bars for forming a cooking surface. However, in this embodiment, grate section 266 incorporates a central flattened plate 276.

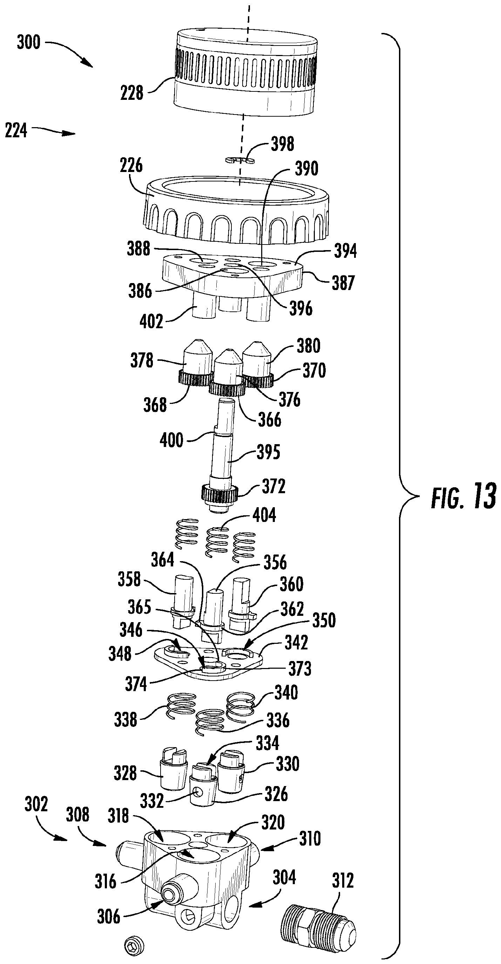

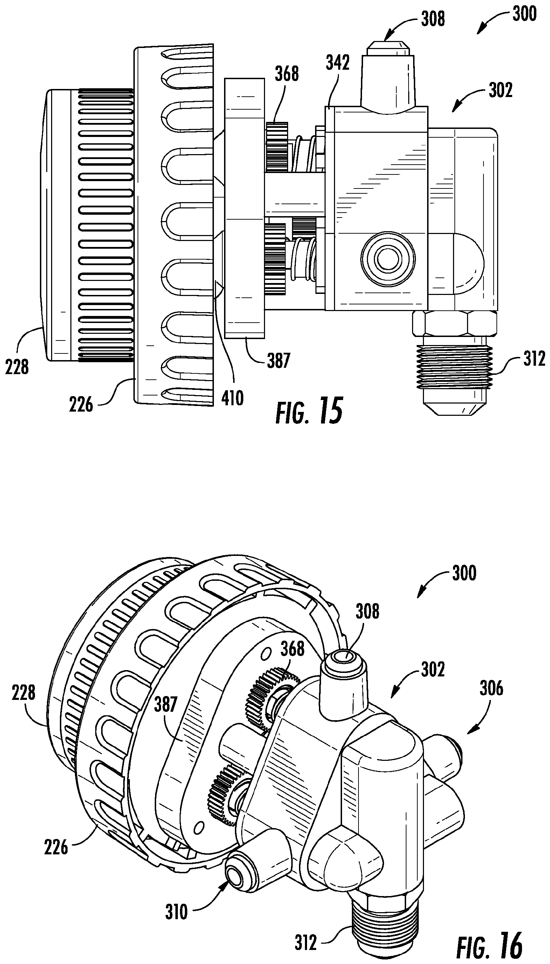

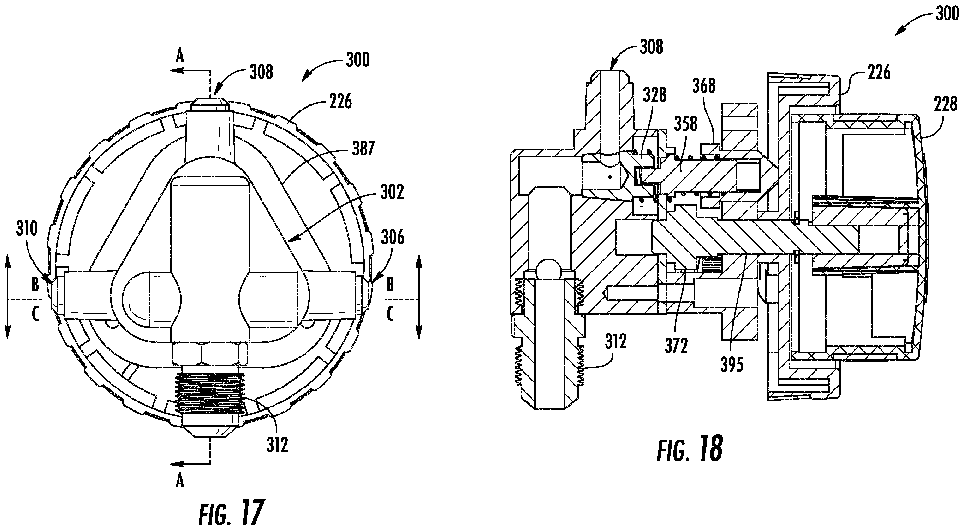

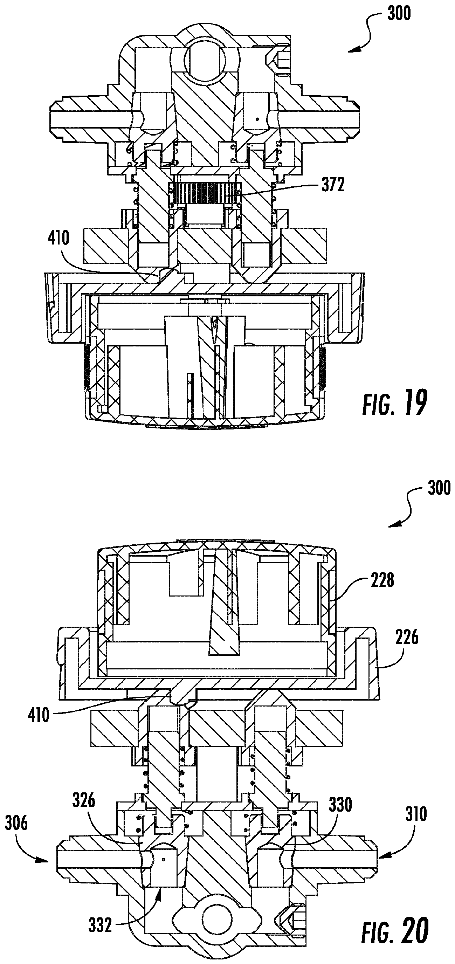

An embodiment of a gas control valve 300 is depicted in FIGs. 13-21. As shown in FIG. 13, gas control valve 300 incorporates a manifold 302, which includes an inlet port 304. Inlet port 304 internally communicates with outlet ports 306, 308 and 310. An inlet fitting 312 also is provided for interconnecting inlet port 304 with a supply of gas.

Manifold 302 defines valve receptacles 316, 318 and 320, which correspond to outlet ports 306, 308 and 310, respectively. Each of the valve receptacles is configured to receive a corresponding valve head, which is rotatably disposed within one of the valve receptacles. Specifically, valve head 326 is disposed within valve receptacle 316, valve head 328 is disposed within valve receptacle 318, and valve head 330 is disposed within valve receptacle 320. Each valve head incorporates a gas flow passage and a mating feature (e.g., a slot). For instance, valve head 326 incorporates a gas flow passage 332 (which extends from a bottom of the valve head through a sidewall) and a mating feature 334. In this embodiment, the mating features are disposed at the ends of the valve heads (i.e., distal ends) that extend outwardly from manifold 302.

Biasing members (e.g., springs) are positioned to engage between the valve heads and a backing plate 342 to urge the valve heads to seat within the corresponding receptacles. In particular, biasing member 336 is disposed about valve head 326, biasing member 338 is disposed about valve head 328, and biasing member 340 is disposed about valve head 330. Backing plate 342 includes through-holes that are configured for receiving the proximal ends of actuator rods, which are configured to engage corresponding valve heads. For example, through-hole 346 is configured to receive the proximal end of actuator rod 356, through-hole 348 is configured to receive the proximal end of actuator rod 358, and through-hole 350 is configured to receive the proximal end of actuator rod 360. The proximal ends of the actuator rods incorporate mating features that are complementary to the mating features of the valve heads so that each of the valve heads matingly engages a corresponding one of the actuator rods. As such, valve head 326 engages actuator rod 356, valve head 328 engages actuator rod 358, and valve head 330 engages actuator rod 360. In this embodiment, the mating features of the valve heads are configured as slots and the complementary mating features of the actuator rods are flattened ends, whereas in other embodiments the complementary mating features of the actuator rods are configured as slots and the valve heads incorporate flattened ends.

Each of the actuator rods extends lengthwise from a proximal end, which incorporates the complementary mating feature, and a distal end that is configured to engage a corresponding satellite (secondary) gear. Specifically, actuator rod 356 engages satellite gear 366, actuator rod 358 engages satellite gear 368, and actuator rod 360 engages satellite gear 370. The satellite gears are selectively engaged and rotatable in response to rotation of a primary (central) gear 372, which is rotated by control actuator 224. Each of the actuator rods incorporates a flange that limits travel of the actuator rod through the corresponding through-hole. Each flange also incorporates a protrusion, which is configured to engage rotational stops that limit rotation of the actuator rod about its longitudinal axis, thereby setting rotational limits of the associated valve heads to adjust gas flow rates. By way of example, actuator rod 356 incorporates a flange 362 that limits travel through through-hole 346, with flange 362 including a protrusion 364, which is configured to engage rotational stops 374 and 375. In this embodiment, the stops are formed by end surfaces of an upwardly protruding ridge 373 that extends about a portion of the through-hole.

Each of the satellite gears is carried by a corresponding shaft that is received within a corresponding through-hole of a face plate. In particular, satellite gear 366 is carried by shaft 376, which is received within through-hole 386 of face plate 387, satellite gear 368 is carried by shaft 378, which is received within through-hole 388, and satellite gear 370 is carried by shaft 380, which is received within through-hole 390. Distal ends of the shafts that carry the satellite gears (for example, distal end 392 of shaft 386) extend upwardly beyond upper surface 394 of face plate 387. Central shaft 395, which carries central gear 372, also extends upwardly beyond upper surface 394 of face plate 387 after passing through through-hole 396. A key 398 retains central shaft 395 in position by engaging within an annular recess 400.

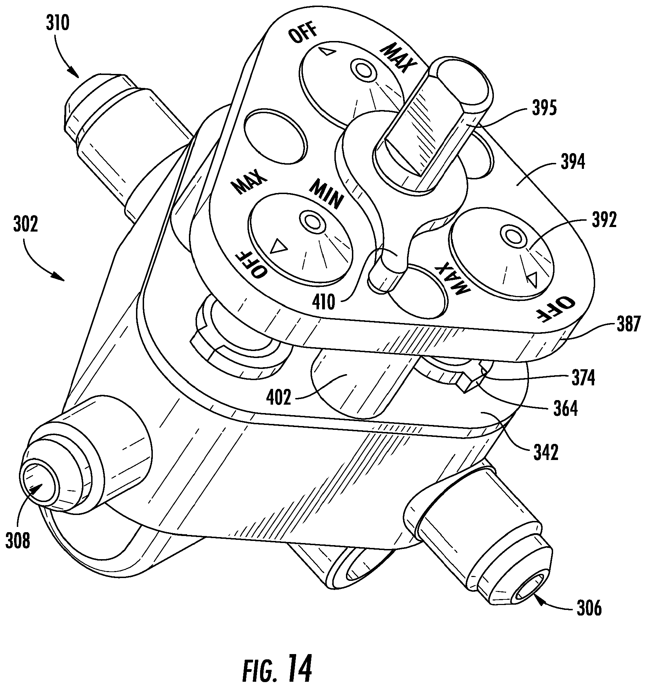

Additionally, spacers (e.g., spacer 402) extend between face plate 387 and backing plate 342 to maintain a desired spacing therebetween. Biasing members (e.g., biasing member 404) are disposed between the shafts and the actuator rods to urge the shafts upwardly along their longitudinal axes so that the shafts are biased to protrude upwardly through the through-holes. Downward movement of the shafts is selectively provided by a cam 410 (FIG. 14) which is carried by selector ring 226 of control actuator 224.

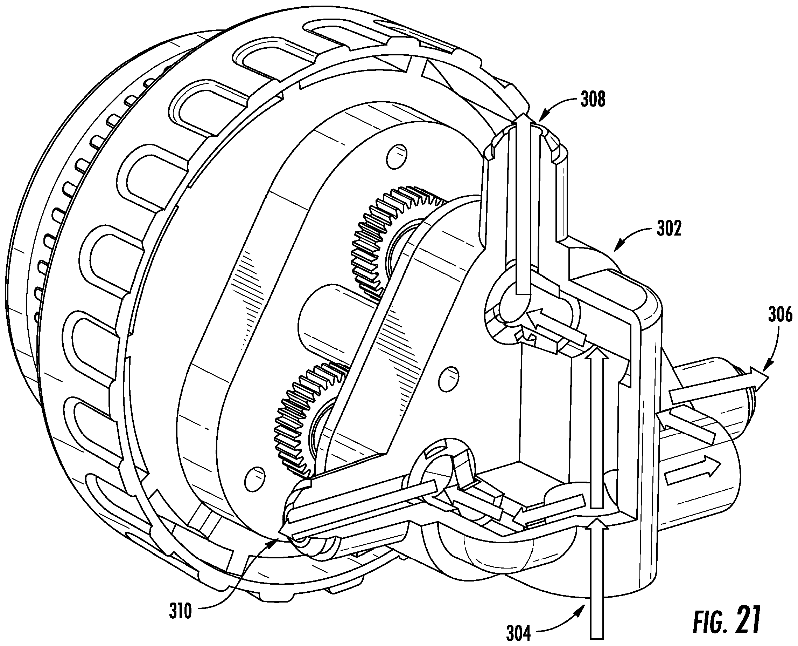

In operation, selective engagement of a shaft with cam 410 urges the shaft downwardly against the biasing force of the corresponding biasing member. This downward movement aligns the associated satellite gear with the central gear. Specifically, rotation of selector ring 226 causes cam 410 to engage the distal end of a shaft resulting in downward movement of the shaft to align the associated satellite gear with the central gear. So aligned, rotation of control knob 228 rotates central shaft 395 and this rotation is transferred to the selected satellite gear. Rotation of the selected satellite gear is transmitted via a corresponding actuator rod to a valve head for positioning the valve head among a range of positions for altering a flow of gas (depicted by arrows in FIG. 21). For instance, maximum rate of flow may be achieved by rotating the valve head until a gas flow passage of the valve head is optimally aligned with the corresponding outlet port.

In the use and operation of the present grill, the user, if desiring to cook a small item or items like a single hamburger or steak, or a pot of beans, the user rotates the control actuator 224 to a first position (e.g., a ¼ rotation from the off position) to direct a flow of gas to the first zone only, after which, the gas is ignited. In this embodiment, the first zone includes the centermost burner tube 212. For larger cooking tasks, or if the user desires greater thermal output, control actuator 224 may be further rotated to a second position (e.g., a ¼ rotation from the first position), which additionally directs a flow of gas to the second zone. In this embodiment, the second zone includes burner tubes 214 and 215. The user may also choose to additionally activate the third zone (which includes burner tubes 216 and 217) by further rotating control actuator 224 to a third position (e.g., a ¼ rotation from the second position).

## Claims

1. A gas-fired barbecue grill cooking system (100) comprising:
a firebox (130);
a burner assembly (132, 180, 210) mounted within the firebox (130), the burner assembly (132, 180, 210) having a first burner tube (184, 186, 214, 215, 216, 217) defining a first cooking zone and a second burner tube (184, 186, 214, 215, 216, 217) defining a second cooking zone; and
a gas control assembly (202, 222) having a gas control valve (200, 220, 300) and a control actuator (160, 224), wherein the gas control valve (200, 220, 300) being configured, in response to positioning of the control actuator (160, 224), to selectively control a first flow of gas to the first burner tube (184, 186, 214, 215, 216, 217) and a second flow of gas to the second burner tube (184, 186, 214, 215, 216, 217) such that the first cooking zone and the second cooking zone are operable to be heated independently in a first mode, in which only one of the first cooking zone and the second cooking zone is heated, and heated simultaneously in a second mode, and, **characterized in that**
the control actuator (160, 224) comprises a control knob (228) and a selector ring (226), each of which is rotatable about a common axis;
the selector ring (226) being configured to designate, via rotation, at least one of the first burner tube (184, 186, 214, 215, 216, 217) or the second burner tube (184, 186, 214, 215, 216, 217) for receiving a corresponding flow of gas; and
the control knob (228) being configured to set a flow rate of gas to the at least of the first burner tube (184, 186, 214, 215, 216, 217) or the second burner tube (184, 186, 214, 215, 216, 217) designated with the selector ring (226).

2. A system (100) as defined in claim 1, wherein the gas control valve (200, 220, 300) has a primary gear (366, 368, 370) and a secondary gear (366, 368, 370), the primary gear (366, 368, 370) being configured to be rotated via the control knob (228), the secondary gear (366, 368, 370) being selectively engaged by the primary gear (366, 368, 370) in response to rotation of the selector ring (226).

3. A system (100) as defined in claim 2, wherein:
the gas control valve (200, 220, 300) has a valve head (326, 328, 330) defining a gas flow passage (332) there through;
the valve head (326, 328, 330) is configured to rotate in response to rotation of the secondary gear (366, 368, 370).

4. A system (100) as defined in claim 1, wherein:
the system (100) further comprises a cooking grate assembly (174, 260) positioned above the burner assembly (132, 180, 210); and
the cooking grate assembly (174, 260) has a grate section (262, 266, 272, 274), defining an aperture (264), and a removable grate section (262, 266, 272, 274) configured to be received within the aperture (264).

5. A system (100) as defined in claim 4, wherein the removable grate section (262, 266, 272, 274) has a central plate (276).

6. A system (100) as defined in claim 4, wherein:
the first burner tube (184, 186, 214, 215, 216, 217) has an intermediate portion (212, 258) in a generally circular configuration; and
the aperture (264) of the grate section (262, 266, 272, 274) is positioned above the intermediate portion (212, 258) of the first burner tube (184, 186, 214, 215, 216, 217).

7. A system (100) as defined in claim 1, further comprising a burner shield assembly (250) positioned above the burner assembly (132, 180, 210), the burner shield (250) assembly having a first shield segment (252, 254, 255, 256, 257) positioned above the first burner tube (184, 186, 214, 215, 216, 217) and a second shield segment (252, 254, 255, 256, 257) positioned above the second burner tube (184, 186, 214, 215, 216, 217).

8. A system (100) as defined in claim 7, wherein:
the first burner tube (184, 186, 214, 215, 216, 217) has an intermediate portion (212, 258) in a generally circular configuration; and
the first shield segment (252, 254, 255, 256, 257) has an intermediate portion (212, 258) in a generally circular configuration aligned with the intermediate portion (212, 258) of the first burner tube (184, 186, 214, 215, 216, 217).

9. A system (100) as defined in claim 7, wherein the first shield segment (252, 254, 255, 256, 257) exhibits a V-shaped cross-section and an apex of the cross-section is rounded.

10. A system (100) as defined in one of the previous claims wherein the gas control valve (200, 220, 300) has a manifold (302), a first valve head (326, 328, 330), a second valve head (326, 328, 330), a primary gear (366, 368, 370), a first secondary gear (366, 368, 370) and a second secondary gear (366, 368, 370);
the manifold (302) having a first valve receptacle (316, 318, 320), a second valve receptacle (316, 318, 320), and an inlet port 304, a first outlet port (306, 308, 310) and a second outlet port (306, 308, 310), the inlet port (304) in fluid communication with the first outlet port (306, 308, 310) and the second outlet port (306, 308, 310);
the first valve head (326, 328, 330), extending into the first valve receptacle (316, 318, 320), having a first gas flow passage (332) formed there through, the second valve head (326, 328, 330), extending into the second valve receptacle (316, 318, 320), having a second gas flow passage (332) formed there through;
the first valve head (326, 328, 330) being configured to rotate in response to rotation of the first secondary gear (366, 368, 370), the second valve head (326, 328, 330) being configured to rotate in response to rotation of the second secondary gear (366, 368, 370);
primary gear (366, 368, 370)being configured to selectively engage at least one of the first secondary gear (366, 368, 370)and the second secondary gear (366, 368, 370);

## Patentansprüche

1. Gasgrillsystem (100), Folgendes umfassend:
einen Feuerraum (130);
eine Brenneranordnung (132, 180, 210), die im Feuerraum (130) montiert ist, wobei die Brenneranordnung (132, 180, 210) einen ersten Stabbrenner (184, 186, 214, 215, 216, 217), der einen ersten Kochbereich definiert, und einen zweiten Stabbrenner (184, 186, 214, 215, 216, 217), der einen zweiten Kochbereich definiert, aufweist; und
eine Gassteuerungsanordnung (202, 222), die ein Gassteuerungsventil (200, 220, 300) und ein Steuerungsstellglied (160, 224) aufweist, wobei das Gassteuerungsventil (200, 220, 300) dazu ausgelegt ist, als Reaktion auf das Anordnen des Steuerungsstellglieds (160, 224) eine erste Gasströmung zum ersten Stabbrenner (184, 186, 214, 215, 216, 217) und eine zweite Gasströmung zum zweiten Stabbrenner (184, 186, 214, 215, 216, 217) selektiv zu steuern, sodass der erste Kochbereich und der zweite Kochbereich dazu funktionsfähig sind, in einem ersten Modus, in dem nur der erste Kochbereich oder der zweite Kochbereich beheizt wird, unabhängig beheizt zu werden, und in einem zweiten Modus gleichzeitig beheizt zu werden, und **dadurch gekennzeichnet, dass**
das Steuerungsstellglied (160, 224) einen Drehregler (228) und einen Auswahlring (226) umfasst, die jeweils um eine gemeinsame Achse drehbar sind;
der Auswahlring (226) dazu ausgelegt ist, über eine Drehung den ersten Stabbrenner (184, 186, 214, 215, 216, 217) und/oder den zweiten Stabbrenner (184, 186, 214, 215, 216, 217) zu bestimmen, eine zugehörige Gasströmung aufzunehmen; und
der Drehregler (228) dazu ausgelegt ist, eine Gasströmungsgeschwindigkeit zum durch den Auswahlring (226) bestimmten ersten Stabbrenner (184, 186, 214, 215, 216, 217) und/oder zweiten Stabbrenner (184, 186, 214, 215, 216, 217) einzustellen.

2. System (100) nach Anspruch 1, wobei das Gassteuerungsventil (200, 220, 300) ein primäres Zahnrad (366, 368, 370) und ein sekundäres Zahnrad (366, 368, 370) aufweist, wobei das primäre Zahnrad (366, 368, 370) dazu ausgelegt ist, über den Drehregler (228) gedreht zu werden, wobei das primäre Zahnrad (366, 368, 370) als Reaktion auf die Drehung des Auswahlrings (226) selektiv in das sekundäre Zahnrad (366, 368, 370) eingreift.

3. System (100) nach Anspruch 2, wobei:
das Gassteuerungsventil (200, 220, 300) einen Ventilkopf (326, 328, 330) aufweist, der einen Gasströmungsweg (332) dort hindurch definiert;
der Ventilkopf (326, 328, 330) dazu ausgelegt ist, sich als Reaktion auf das Drehen des sekundären Zahnrads (366, 368, 370) zu drehen.

4. System (100) nach Anspruch 1, wobei:
das System (100) ferner eine Grillrostanordnung (174, 260) umfasst, die über der Brenneranordnung (132, 180, 210) angeordnet ist; und
die Grillrostanordnung (174, 260) einen Rostabschnitt (262, 266, 272, 274), der eine Öffnung (264) definiert, und einen herausnehmbaren Rostabschnitt (262, 266, 272, 274), der dazu ausgelegt ist, innerhalb der Öffnung (264) aufgenommen zu werden, aufweist.

5. System (100) nach Anspruch 4, wobei der herausnehmbare Rostabschnitt (262, 266, 272, 274) eine Mittelplatte (276) aufweist.

6. System (100) nach Anspruch 4, wobei:
der erste Stabbrenner (184, 186, 214, 215, 216, 217) einen Zwischenabschnitt (212, 258) in einer im Allgemeinen kreisförmigen Konfiguration aufweist und
die Öffnung (264) des Rostabschnitts (262, 266, 272, 274) über dem Zwischenabschnitt (212, 258) des ersten Stabbrenners (184, 186, 214, 215, 216, 217) angeordnet ist.

7. System (100) nach Anspruch 1, ferner eine Brennerabschirmungsanordnung (250) umfassend, die über der Brenneranordnung (132, 180, 210) angeordnet ist, wobei die Brennerabschirmungsanordnung (250) ein erstes Abschirmungssegment (252, 254, 255, 256, 257), das über dem ersten Stabbrenner (184, 186, 214, 215, 216, 217) angeordnet ist, und ein zweites Abschirmungssegment (252, 254, 255, 256, 257), das über dem zweiten Stabbrenner (184, 186, 214, 215, 216, 217) angeordnet ist, aufweist.

8. System (100) nach Anspruch 7, wobei:
der erste Stabbrenner (184, 186, 214, 215, 216, 217) einen Zwischenabschnitt (212, 258) in einer im Allgemeinen kreisförmigen Konfiguration aufweist und
das erste Abschirmungssegment (252, 254, 255, 256, 257) einen Zwischenabschnitt (212, 258) in einer im Allgemeinen kreisförmigen Konfiguration aufweist, der mit dem Zwischenabschnitt (212, 258) des ersten Stabbrenners (184, 186, 214, 215, 216, 217) ausgerichtet ist.

9. System (100) nach Anspruch 7, wobei das erste Abschirmungssegment (252, 254, 255, 256, 257) einen V-förmigen Querschnitt aufweist und wobei der Scheitel des Querschnitts abgerundet ist.

10. System (100) nach einem der vorstehenden Ansprüche, wobei:
das Gassteuerungsventil (200, 220, 300) einen Verteiler (302), einen ersten Ventilkopf (326, 328, 330), einen zweiten Ventilkopf (326, 328, 330), ein primäres Zahnrad (366, 368, 370), ein erstes sekundäres Zahnrad (366, 368, 370) und ein zweites sekundäres Zahnrad (366, 368, 370) aufweist;
der Verteiler (302) eine erste Ventilaufnahme (316, 318, 320), eine zweite Ventilaufnahme (316, 318, 320) und einen ersten Einlassanschluss 304, einen ersten Auslassanschluss (306, 308, 310) und einen zweiten Auslassanschluss (306, 308, 310) aufweist, wobei der Einlassanschluss (304) mit dem ersten Auslassanschluss (306, 308, 310) und dem zweiten Auslassanschluss (306, 308, 310) in Fluidverbindung steht;
der erste Ventilkopf (326, 328, 330), der sich in die erste Ventilaufnahme (316, 318, 320) erstreckt, einen ersten dort hindurch ausgebildeten Gasströmungsdurchgang (332) aufweist, wobei der zweite Ventilkopf (326, 328, 330), der sich in die zweite Ventilaufnahme (316, 318, 320) erstreckt, einen zweiten dort hindurch ausgebildeten Gasströmungsdurchgang (332) aufweist;
der erste Ventilkopf (326, 328, 330) dazu ausgelegt ist, sich als Reaktion auf die Drehung des ersten sekundären Zahnrads (366, 368, 370) zu drehen, wobei der zweite Ventilkopf (326, 328, 330) dazu ausgelegt ist, sich als Reaktion auf die Drehung des zweiten sekundären Zahnrads (366, 368, 370) zu drehen;
das primäre Zahnrad (366, 368, 370) dazu ausgelegt ist, selektiv in das erste sekundäre Zahnrad (366, 368, 370) und/oder das zweite sekundäre Zahnrad (366, 368, 370) einzugreifen.

## Revendications

1. Système de cuisson à gril de barbecue à gaz (100), comprenant :
un foyer (130) ;
un ensemble brûleur (132, 180, 210) monté à l'intérieur du foyer (130), l'ensemble brûleur (132, 180, 210) ayant un premier tube de brûleur (184, 186, 214, 215, 216, 217) définissant une première zone de cuisson et un second tube de brûleur (184, 186, 214, 215, 216, 217) définissant une seconde zone de cuisson ; et
un ensemble de commande de gaz (202, 222) ayant une valve de commande de gaz (200, 220, 300) et un actionneur de commande (160, 224), dans lequel la valve de commande de gaz (200, 220, 300) est configurée, en réponse au positionnement de l'actionneur de commande (160, 224), pour sélectivement commander un premier écoulement de gaz vers le premier tube de brûleur (184, 186, 214, 215, 216, 217) et un second écoulement de gaz vers le second tube de brûleur (184, 186, 214, 215, 216, 217) de telle sorte que la première zone de cuisson et la seconde zone de cuisson soient utilisables pour être chauffées indépendamment dans un premier mode, dans lequel seulement une de la première zone de cuisson et de la seconde zone de cuisson est chauffée, et chauffées simultanément dans un second mode, et, **caractérisé en ce que**
l'actionneur de commande (160, 224) comprend un bouton de commande (228) et une bague de sélection (226), chacun desquels est rotatif autour d'un axe commun ;
la bague de sélection (226) étant configurée pour désigner, par l'intermédiaire de rotation, au moins un du premier tube de brûleur (184, 186, 214, 215, 216, 217) ou du second tube de brûleur (184, 186, 214, 215, 216, 217) pour recevoir un écoulement de gaz correspondant ; et
le bouton de commande (228) étant configuré pour régler une vitesse d'écoulement de gaz vers l'au moins du premier tube de brûleur (184, 186, 214, 215, 216, 217) ou du second tube de brûleur (184, 186, 214, 215, 216, 217) désigné avec la bague de sélection (226).

2. Système (100) selon la revendication 1, dans lequel la valve de commande de gaz (200, 220, 300) a une roue d'engrenage primaire (366, 368, 370) et une roue d'engrenage secondaire (366, 368, 370), la roue d'engrenage primaire (366, 368, 370) étant configurée pour être mise en rotation par l'intermédiaire du bouton de commande (228), la roue d'engrenage primaire (366, 368, 370) entrant sélectivement en prise avec la roue d'engrenage secondaire (366, 368, 370) en réponse à la rotation de la bague de sélection (226).

3. Système (100) selon la revendication 2, dans lequel :
la valve de commande de gaz (200, 220, 300) a une tête de valve (326, 328, 330) définissant un passage d'écoulement de gaz (332) à travers celle-ci ;
la tête de valve (326, 328, 330) est configurée pour entrer en rotation en réponse à la rotation de la roue d'engrenage secondaire (366, 368, 370).

4. Système (100) selon la revendication 1, dans lequel :
le système (100) comprend en outre un ensemble grille de cuisson (174, 260) positionné au-dessus de l'ensemble brûleur (132, 180, 210) ; et
l'ensemble grille de cuisson (174, 260) a une section de grille (262, 266, 272, 274), définissant une ouverture (264), et une section de grille amovible (262, 266, 272, 274) configurée pour être reçue à l'intérieur de l'ouverture (264).

5. Système (100) selon la revendication 4, dans lequel la section de grille amovible (262, 266, 272, 274) a une plaque centrale (276).

6. Système (100) selon la revendication 4, dans lequel :
le premier tube de brûleur (184, 186, 214, 215, 216, 217) a une partie intermédiaire (212, 258) dans une configuration généralement circulaire ; et
l'ouverture (264) de la section de grille (262, 266, 272, 274) est positionnée au-dessus de la partie intermédiaire (212, 258) du premier tube de brûleur (184, 186, 214, 215, 216, 217).

7. Système (100) selon la revendication 1, comprenant en outre un ensemble écran de brûleur (250) positionné au-dessus de l'ensemble brûleur (132, 180, 210), l'ensemble écran de brûleur (250) ayant un premier segment d'écran (252, 254, 255, 256, 257) positionné au-dessus du premier tube de brûleur (184, 186, 214, 215, 216, 217) et un second segment d'écran (252, 254, 255, 256, 257) positionné au-dessus du second tube de brûleur (184, 186, 214, 215, 216, 217).

8. Système (100) selon la revendication 7, dans lequel :
le premier tube de brûleur (184, 186, 214, 215, 216, 217) a une partie intermédiaire (212, 258) dans une configuration généralement circulaire ; et
le premier segment d'écran (252, 254, 255, 256, 257) a une partie intermédiaire (212, 258) dans une configuration généralement circulaire alignée avec la partie intermédiaire (212, 258) du premier tube de brûleur (184, 186, 214, 215, 216, 217).

9. Système (100) selon la revendication 7, dans lequel le premier segment d'écran (252, 254, 255, 256, 257) présente une section transversale en forme de V et un sommet de la section transversale est arrondi.

10. Système (100) selon l'une des revendications précédentes, dans lequel la valve de commande de gaz (200, 220, 300) a un collecteur (302), une première tête de valve (326, 328, 330), une seconde tête de valve (326, 328, 330), une roue d'engrenage primaire (366, 368, 370), une première roue d'engrenage secondaire (366, 368, 370) et une seconde roue d'engrenage secondaire (366, 368, 370) ;
le collecteur (302) a un premier réceptacle de valve (316, 318, 320), un second réceptacle de valve (316, 318, 320), et un orifice d'entrée 304, un premier orifice de sortie (306, 308, 310) et un second orifice de sortie (306, 308, 310), l'orifice d'entrée (304) étant en communication fluidique avec le premier orifice de sortie (306, 308, 310) et le second orifice de sortie (306, 308, 310) ;
la première tête de valve (326, 328, 330), s'étendant dans le premier réceptacle de valve (316, 318, 320), a un premier passage d'écoulement de gaz (332) formé à travers celle-ci, la seconde tête de valve (326, 328, 330), s'étendant dans le second réceptacle de valve (316, 318, 320), a un second passage d'écoulement de gaz (332) formé à travers celle-ci ;
la première tête de valve (326, 328, 330) est configurée pour entrer en rotation en réponse à la rotation de la première roue d'engrenage secondaire (366, 368, 370), la seconde tête de valve (326, 328, 330) est configurée pour entrer en rotation en réponse à la rotation de la seconde roue d'engrenage secondaire (366, 368, 370) ;
la roue d'engrenage primaire (366, 368, 370) est configurée pour sélectivement entrer en prise avec au moins une de la première roue d'engrenage secondaire (366, 368, 370) et de la seconde roue d'engrenage secondaire (366, 368, 370).
